# EUROPÄISCHE PATENTSCHRIFT

(11) **EP 2 102 631 B1**
(45) Veröffentlichungstag und Bekanntmachung des Hinweises auf die Patenterteilung: **23.01.2013**
(21) Anmeldenummer: 07856651.0
(22) Anmeldetag: 12.12.2007
(51) Int. Cl.: G01N 21/17

(54) **RÄUMLICH HOCHAUFGELÖSTES ABBILDEN EINER STRUKTUR**
SPATIAL HIGH-RESOLUTION REPRESENTATION OF A STRUCTURE
REPRODUCTION A HAUTE RESOLUTION SPATIALE D'UNE STRUCTURE

(30) Priorität: 18.12.2006 DE 102006060180
(43) Veröffentlichungstag der Anmeldung: 23.09.2009
(73) Patentinhaber: Max-Planck-Gesellschaft zur Förderung der Wissenschaften e.V., 80539 München (DE)
(72) Erfinder: HELL, Stefan, 37085 Göttingen (DE)
(74) Vertreter: Rehberg Hüppe + Partner
(86) Internationale Anmeldenummer: PCT/EP2007/010905
(87) Internationale Veröffentlichungsnummer: WO 2008/074429

(56) Entgegenhaltungen:
- US-A1- 2004 188 602
- US-A1- 2004 212 799
- US-B1- 6 756 591
- DATABASE INSPEC [Online] THE INSTITUTION OF ELECTRICAL ENGINEERS, STEVENAGE, GB; 15. Januar 2006 (2006-01-15), BERCIAUD S ET AL: "Photothermal heterodyne imaging of individual metallic nanoparticles: theory versus experiment" XP002477745 Database accession no. 8783738 in der Anmeldung erwähnt -& Physical Review B (Condensed Matter and Materials Physics) APS through AIP USA, Bd. 73, Nr. 4, 16. Januar 2006 (2006-01-16), Seiten 45424-1, XP002477744 ISSN: 0163-1829

## Beschreibung

Die Erfindung bezieht sich auf ein Verfahren zum räumlich hochaufgelösten Abbilden einer Struktur in einer Probe mit den Merkmalen des Oberbegriffs des unabhängigen Patentansprüchs 1. Weiterhin bezieht sich die Erfindung auf eine Vorrichtung zum räumlich hochaufgelösten Abbilden einer Struktur In einer Probe mit den Merkmalen des Oberbegriffs des nebengeordneten Patentanspruchs 15.

Mit dem räumlich hochaufgelösten Abbilden einer Struktur in einer Probe Ist hier insbesondere das Abbilden der Struktur mit einer räumlichen Auflösung gemeint, die besser als die Beugungsgrenze ist, wie als für herkömmliche lichtmikroskopische Verfahren gilt.

### STAND DER TECHNIK

Aus der US 2004/0212799 A1 Ist ein Verfahren zum räumlich hochaufgelösten Abbilden einer Struktur in einer Probe bekannt, bei dem eine Substanz zum Markieren der Struktur In der Probe aus einer Gruppe von Substanzen ausgewählt wird, die mit einem ersten elektromagnetischen Signal aus einem ersten Zustand, In dem als erste spektrale Elgenschaften aufweist, bis auf einen von dem ersten elektromagnatischen Signal gezielt ausgelassenen Bereich in einen zweiten Zustand überführbar ist. In dem sie zweite spektrale Eigenschaften aufweist. Für die beiden spektralen Eigenschaften der Substanz werden verschiedene Möglichkeiten angegeben. Die auch in den näher beschriebenen Ausführungsbeispielen der als US 2004/0212799 A1 angsführte Möglichkeit der unterschiedlichen spektralen Eigenschaften Ist ein erster Zustand, In dem die Substanz fluoreszent Ist, und ein zweiter Zustand, In dem sie nicht fluoreszent ist. Um die Struktur in der Probe abzubilden, wird die Fluoreszenz der Substanz mit einem zweiten elektromagnetischen Signal angeregt, und das von der Substanz emittierte Fluoreszenzlicht wird detektiert. Dabei kann das Fluoreszenzlicht von der Substanz nur aus dem mit dem ersten elektromagnetischen Signal gezielt ausgelassenen Bereich der Probe stammen, in dem sich die Substanz weiterhin In dem ersten Zustand befindet. Wenn dieser Bereich beispielsweise die Nullstelle eines Interferenzmusters des ersten elektromagnetischen Signals ist, kann er kleiner gemacht werden als die Beugungsgrenze, die für das Abbilden der Probe mit Licht der Wellenlänge des ersten oder des zweiten elektromagnetischen Signals gilt. Unter den weiteren Möglichkeiten für die beiden unterschiedlichen spektralen Eigenschaften der Substanz in dem ersten und zweiten Zustand, die In der US 2004/0212799 A1 angesprochen werden, findet sich der Hinwels auf eine unterschiedliche Absorption für ein zweites optisches Signal In Form eines Taststrahls. Zu dieser dem Oberbegriff des unabhängigen Patentanspruchs 1 entsprechenden Variante des bekannten Verfuhrens und der damit implizit offenbarten Vorrichtung mit den Merkmalen das Oberbegriffs des nebengeordneten Patentanspruche 15 finden sich aber keine näheren Angaben.

Zur Umsetzung der aus der US 2004/0212799A1 bekannten Grundides, mit einem elektromagnetischen Signal eine räumliche Verteilung eines Anteils der Substanz In einem fluoreszlerenden Zustand einzustellen, bei der die Bereiche, in denen die Substanz In dem fluoreszierenden Zustand vorliegt, räumlich begrenzt sind, ist es auch bekannt, ein elektromagnetisches Signal, das die Substanz von einem nicht fluoreszierenden In einen fluoreszierenden Zustand überführt, In derartiger Intensität auf die Probe aufzubringen, dass sich danach nur einzeine Moleküls der Substanz in dem fluoreszierenden Zustand befinden, die bei einer mikroskopischen Abbildung des von ihnen ausgehenden Fluoreszenzlichts getrennt voneinander abgebildet werden. Damit steht fest, dass die getrennt voneinander. erfassten Anteile des Fluoreszenzlichts von der Probe jeweils von einzelnen Molekülen stammen, deren Lage aus dem Schwerpunkt der Intensitätsvertellung das Fluoresszenzilchts mit höherer Ortsauflösung als der Beugungsgrenze bei der Wellenlänge des Fluoreszenzlichts bestimmt werden kann. Diese Technik ist neben dem Namen SPARSE auch unter dem Namen STORM oder PALM bekannt, während für die aus der US 2004/0212799 A1 bekannte Technik der Name RESOLFT verwendet wird.

Als grundsätzlicher Nachteil von fluoreszenzmikroskopischen Verfahren ist das Bleichen der verwendeten Fluoreszenzfarbstoffe bekannt. Dies bedeutet, dass ein Fluoreszenzfarbstoff nur eine endliche Anzahl von Anregungs- und Fluoreszenz-Emissionszyklen durchlaufen kann, melstens weniger als 100,000, bevor er eine unerwünschte chemische Umwandlung In einen dauerhaft nicht mehr fluoreszierenden Zustand erleidet. Dieses Problem tritt auch bei den oben beschriebenen RESOLFT- bzw. SPARSE-Techniken auf. Hier kommt hinzu, dass das erste elektromagnetische Signal, mit dem die räumliche Verteilung des Anteils der Substanz in dem fluoreszierenden Zustand eingestellt wird, ebenfalls zu einer Belastung und damit ggf. zu einem früheren Bleichen der Substanz führen kann. Bei einigen Ausführungsformen der SPARSE-Technik ist es daher vorgesehen, die einzelnen Moleküle der Substanz nur einmal mit dem ersten Signal in den fluoreszierenden Zustand zu bringen und dann darin so lange zur Fluoreszenz anzuregen, bis das einzelne Molekül gebleicht ist.

Zudem ist neben der absoluten Ausbeute an Fluoreszenzlicht von einem Molekül eines Fluoreszenzfarbstoffs auch die von diesem während eines bestimmten Zeitraums erhältliche Menge an Fluoreszenzlicht begrenzt. Ein Molekül eines Fluoreszenzfarbstoffs kann immer nur dann mit Anregungslicht zu Fluoreszenz angeregt werden, wenn es sich in seinem Grundzustand befindet. Bis zu einer nächstmöglichen Anregung muss also gewartet werden, bis das Molekül in seinen Grundzustand zurückgekehrt ist. Ob es bei dieser Rückkehr in seinen Grundzustand überhaupt Fluoreszenzlicht aussendet, hängt von dem Verhältnis seiner Übergangswahrscheinlichkeiten ab. Häufig kommt es in weniger als 50 % der Anregungen zur Aussendung von Fluoreszenzlicht. Mit welcher Wahrscheinlichkeit ein Fluoreszenzphoton detektiert wird, bestimmt der jeweiligen Messaufbau; dieser Wert ist meistens sogar kleiner als 10 %. Um auswertbare Mengen an Fluoreszenzlicht zu detektieren, müssen daher vielfach lange Messzeiten in Kauf genommen werden; sie betragen in der Regel mehr als 10 µs pro Bildpunkt oder Fluoreszenzmolekül. Diese Messzeiten akkumulieren sich insbesondere im Fall von stark lokalisierten Anteilen des in dem fluoreszierenden Zustand befindlichen Fluoreszenzfarbstoffs oder gar einzelnen fluoreszierenden Molekülen bis ein vollständiges Abbild der interessierenden Struktur in der Probe erstellt ist. Lange Messzeiten sind nicht nur grundsätzlich unökonomisch, sondern werfen regelmäßig Probleme mit einem Driften verschiedener Komponenten des verwendeten Messaufbaus auf.

Als Alternative zur Markierung einer Struktur in einer Probe mit einer fluoreszierenden Substanz ist es aus S. Berciaud et al.: "Photothermal heterodyne imaging of individual metallic nanoparticles: Theory versus experiment" in PHYSICAL REVIEW B 73, 045424 (2006) bekannt, die Struktur mit Goldnanopartikeln zu markieren. Zur Sichtbarmachung der markierten Struktur wird ein als photothermisches Heterodyn-Abbilden (Photothermal Heterodyne Imaging = PHI) bezeichnetes Verfahren beschrieben, das auf einer Temperaturerhöhung der Probe um einen einzelnen Nanopartikel in Folge der Absorption eines elektromagnetischen Signals durch einen in dem jeweiligen Messbereich befindlichen Goldnanopartikel beruht. Das von dem Goldnanopartikel absorbierte elektromagnetische Signal wird in Wärme umgewandelt. Hierdurch wird eine lokale Temperaturerhöhung der Probe am Ort des Nanopartikels hervorgerufen. Konkret bildet sich ein von dem Nanopartikel weg zeigender Temperaturgradient aus. Dieser Temperaturgradient wirkt sich auf die Phase eines durch die Probe laufenden Teststrahls aus, der zusätzlich zu dem elektromagnetischen Signal eingesetzt wird, das von den Goldnanopartikeln absorbiert wird und damit deren Temperatur erhöht. Zur Erfassung der Phasenverschiebung aufgrund einer lokalen Temperaturerhöhung, um die Größe und ggf. auch die Lage der Temperaturerhöhung zu bestimmen, wird bei der PHI-Technik ein frequenzmodulierter Laserstrahl zum Erwärmen der Goldpartikel eingesetzt, der zu einer frequenzmodulierten Phasenverschiebung des Teststrahls führt, die beim Vergleich mit dem nicht phasenverschobenen Teststrahl leicht erfasst werden kann. Hiermit soll es möglich sein, Goldnanopartikel bis hinab zu einer Größe von 1,4 nm (67 Atomen) zu detektieren.

Andere Verfahren zur Detektion lokaler Temperaturerhöhungen aufgrund absorbierender Goldnanopartikel umfassen andere Formen der Fernfeldinterferenzmikroskopie, bei denen verschiedene Anteile eines Teststrahls, von denen nur einer durch den Bereich der Temperaturerhöhung hindurch getreten ist, miteinander zur Interferenz gebracht werden (siehe D. Boyer et al.: "Photothermal Imaging of Nanometer-Sized Metal Particles Among Scatterers" in Science Vol. 297, S. 1160-1163 (16. August 2002).

Auch der als thermische Linse bekannte Effekt kann zur mikroskopischen Detektion einer durch Absorption verursachten lokalen Temperaturerhöhung verwendet werden, wobei hier das die Temperaturerhöhung aufgrund seiner Absorption verursachende elektromagnetische Signal und der infolge des resultierenden Temperaturgradienten phasenverschobene Teststrahl identisch sind (s. E. Tamaki et al.: "Single-Cell Analysis by a Scanning Thermal Lens Microscope with a Microchip: Direct Monitoring of Cytochrome c Distribution during Apoptosis Process" in Analytical Chemistry, Vol. 74, No. 7, S. 1560-1564 (April 1, 2002)).

### AUFGABE DER ERFINDUNG

Der Erfindung liegt die Aufgabe zugrunde, ein konkret praktizierbares Verfahren mit den Merkmalen des Oberbegriffs des unabhängigen Patentanspruchs 1 und eine entsprechende Vorrichtung mit den Merkmalen des Oberbegriffe des nebengeordneten Patentanspruchs 15 aufzuzeigen, die eine bessere räumliche Auflösung der Struktur In der Probe als die Beugungsgrenze ermöglichen, ohne dabei die bekannten Nachteile der Verwendung von Fluoreszenzfarbstoffen in Kauf zu nehmen.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 15 gelöst. Bevorzugte Ausführungsformen des neuen Verfahrens finden sich in den abhängigen Patentansprüchen 2 bis 14.

### BESCHREISUNG DER ERFINDUNG

Bei dem neuen Verfahren wird die Struktur In der Probe mit einer Substanz markiert, die mit einem ersten elektromagnetischen Signal von einem ersten Zustand In einen zweiten Zustand überführbar ist oder umgekehrt, wobei die Substanz In dem ersten Zustand einen höheren Absorptionsquerschnitt für ein zweites elektromagnetisches Signal aufweist als in dem zweiten Zustand. Dieses zweite elektromagnetische Signal wird auf die Probe aufgebracht, nachdem mittels des ersten elektromagnetischen Signals eine räumliche Verteilung eines Anteils der Substanz in dem ersten Zustand eingeteilt wurde, bei der mindestens ein Bereich, In dem die Substanz im Wesentlichen in dem ersten Zustand vorliegt, räumlich begrenzt ist. Dabei muss keine Lokalisierung des zweiten elektromagnetischen Signals auf bestimmte Bereiche der Probe erfolgen. Die räumliche Eingrenzung erfolgt bereits zuvor mittels des ersten elektromagnetischen Signals. Die Absorption des zweiten elektromagnetischen Signals durch die In dem ersten Zustand befindilchen Anteile der Substanz führt in deren Bereich zu einer lokalen Temperaturerhöhung der Probe. Diese wird bei dem neuen Verfahren detektiert, statt zu versuchen, direkt die unterschiedliche Absorption der Substanz mit einem Teststrahl zu erfassen.

Die lokale Temperaturerhöhung der Probe beim Beaufschlagen der Probe mit dem zweiten elektromagnstischen Signal in Folge des größeren Absorptionsquerschnitts der Substanz in den ersten Zustand kann mit allen als solchen bekannten Techniken zur Detektion lokaler Temperaturerhöhungen detektiert werden. Dazu gehören alle unter der Überschrift Stand der Technik beschriebenen Verfahren zum photothermischen Abbilden. D. h. die mindestens eine lokale Temperaturerhöhung der Probe kann insbesondere anhand einer mit ihr verbundenen Phasenverschiebung eines durch die Probe laufenden elektromagnetischen Signals detektiert werden. Diese Phasenverschiebung basiert auf der mit der Temperaturerhöhung verbundenen Brechungsindexänderung der Probe. Grundsätzlich ist aber auch die Detektion von Streulicht, das durch diese Brechungsindexänderung der Probe zustande kommt, möglich.

Bei diesem elektromagnetischen Signal, dessen Phasenverschiebung beobachtet wird, kann es sich um ein zusätzliches drittes elektromagnetisches Signal, das sich in seiner Wellenlänge von dem ersten und dem zweiten elektromagnetischen Signal unterscheidet, handeln. Es kann aber auch das erste oder das zweite elektromagnetische Signal bezüglich auftretender Phasenverschiebungen beobachtet werden. Im Fall des zweiten elektromagnetischen Signals liegt dann eine ähnliche Konstellation wie bei der als thermische Linse bekannten Technik vor.

Typischerweise ist mindestens eines der hier erwähnten elektromagnetischen Signale ein monochromatisches optisches Signal. Häufig werden alle eingesetzten elektromagnetischen Signale monochromatische optische Signale sein.

Eine besonders hohe Empfindlichkeit in Bezug auf lokale Temperaturerhöhungen der Probe weisen die unter der Überschrift Stand der Technik beschriebenen Techniken der optischen Fernfeldinterferenzmikroskopie auf, zu denen auch die PHI-Technik zählt.

Vorzugsweise wird nicht nur binär registriert, ob eine lokale Temperaturerhöhung in einem Bereich der Probe vorliegt oder nicht, sondern es wird auch die Höhe dieser Temperaturerhöhung bestimmt, um damit einen Hinweis auf die Menge der Substanz in dem ersten Zustand in dem jeweiligen Bereich zu erhalten.

Alternativ oder zusätzlich kann eine Lage der lokalen Temperaturerhöhungen in der Probe registriert werden. Wenn feststeht oder angenommen wird, dass die Verteilung der die Temperaturerhöhung verursachenden Substanz innerhalb des jeweiligen Bereichs konstant ist und der Bereich selbst hinreichend klein ist, kann hieraus die Lage der Substanz in der Probe und damit ein Teil der interessierenden Struktur mit einer Ortsauflösung besser als die Beugungsgrenze bei der Wellenlänge des elektromagnetischen Signals, mit der die Temperaturerhöhung erfasst wird, bestimmt werden. Dabei wird der Schwerpunkt der Lage der Temperaturerhöhung in der Probe der Lage der Substanz in dem ersten Zustand gleichgesetzt.

Wenn jedoch die Substanz mittels des ersten elektromagnetischen Signals in als solchen bekannten Bereichen der Probe in dem ersten Zustand belassen oder in diesen überführt wird, ist es günstiger, als Lage der die Temperaturerhöhung verursachenden Substanz die Lage dieser Bereiche zu verwenden, und nur die Größe der Temperaturerhöhung zusätzlich zu registrieren, um ein Maß für die Menge der Substanz in dem jeweiligen Bereich zu erhalten.

Bei der vorliegenden Erfindung wäre es zwar wünschenswert, dass die Substanz in dem ersten Zustand einen sehr großen und in dem zweiten Zustand einen Absorptionsquerschnitt für das zweite elektromagnetische Signal von null aufweist. Dies ist jedoch nicht zwingend. Vielmehr ist es ausreichend, wenn die Substanz aus einer Gruppe von Substanzen ausgewählt wird, die in dem ersten Zustand einen mindestens zehnmal, vorzugsweise mindestens einhundertmal größeren Absorptionsquerschnitt für das zweite elektromagnetische Signal aufweisen als in dem zweiten Zustand. Der Temperaturgradient, der sich in Folge des zweiten elektromagnetischen Signals der Probe ausbildet, steigt mit dem Absorptionsquerschnitt der Substanz für das zweite elektromagnetische Signal an.

Die mit der Temperaturerhöhung einhergehende Brechungsindexänderung der Probe, die durch die Phasenverschiebung eines durch die Probe laufenden Signals oder auch durch Streulicht umso besser detektierbar ist, je größer sie ist, hängt neben dem Absorptionsquerschnitt für das zweite elektromagnetische Signal und damit der absoluten Temperaturänderung von der spezifischen Brechungsindexänderung der Probe mit der Temperatur ab. Daher ist es von Vorteil, die zu untersuchende Probe in ein Medium einzubetten, bei dem die Temperaturerhöhung mit einer besonders hohen Brechungsindexänderung einhergeht. So weisen viele organische flüssige Medien eine Brechungsindexreduktion von 0.0005 pro 1 K Temperaturerhöhung auf, wohingegen Wasser nur eine Brechungsindexreduktion 0.0001 pro 1°C aufweist. Alternativ oder zusätzlich kann die Probe auf eine solche Temperatur eingestellt werden, bei der die durch das zweite elektromagnetische Signal hervorgerufene Temperaturerhöhung in dem vorhandenen Medium einen möglichst großen Brechungsindexsprung hervorruft. So ist es bei wässrigen Proben von Vorteil sein, die Probe zu kühlen, wobei eine Probentemperatur von -10 bis 5 °C in Hinblick auf eine große Brechungsindexänderung bei Temperaturänderung besonders günstig ist.

In der Praxis der vorliegenden Erfindung sind besonders solche Substanzen bevorzugt, die wiederholt mittels des ersten elektromagnetischen Signals aus dem ersten Zustand in den zweiten Zustand überführbar sind. Dies ermöglicht es, mit dem ersten optischen Signal eine räumliche Verteilung eines Anteils der Substanz in dem ersten Zustand einzustellen, bei dem sich nur solche Anteile der Substanz in dem ersten Zustand befinden, die sich am Ort einer durch destruktive Überlagerung gebildeten Nullstelle des ersten elektromagnetischen Signals befinden, um mit einer oder mehrerer der derart gebildeten Nullstellen des ersten Signals die gesamte Probe abzuscannen. Bei der Nullstelle, die durch destruktive Überlagerung des ersten Signals mit sich selbst gebildet wird, kann es sich um eine Nullstelle eines Interferenzmusters handeln. Eine besonders bevorzugte Nullstelle dieser Art ist das Zentrum einer Doughnutförmigen Intensitätverteilung des ersten optischen Signals.

Wenn jeweils nur einzelne räumlich voneinander getrennte Moleküle oder Cluster von Molekülen der Substanz, mit der die Struktur in der Probe markiert wird, in den ersten Zustand überführt werden, kann es ausreichend sein, wenn die Substanz aus einer Gruppe von Substanzen ausgewählt wird, die mittels des ersten elektromagnetischen Signals nur einmal aus dem zweiten Zustand in den ersten Zustand überführbar ist. Wenn sie nicht mehr in den zweiten Zustand zurückkehrt, muss sie dann aber aus dem ersten Zustand in einen dritten Zustand überführbar sein, in dem ihr Absorptionsquerschnitt wieder kleiner als in dem ersten Zustand ist. Beim Verwenden einer solchen Substanz wird mit dem ersten optischen Signal eine räumliche Verteilung eines Anteils der Substanz in dem ersten Zustand eingestellt, bei der sich nur einzelne Moleküle oder Cluster von Molekülen der Substanz in dem ersten Zustand befinden, die so weit voneinander beabstandet sind, dass die von ihnen beim Beaufschlagen der Substanz mit dem zweiten Signal ausgehenden lokalen Temperaturerhöhung der Probe in einer Abbildung auf einen zweidimensionalen Photosensor, wie z. B. eine Kamera, getrennt voneinander detektierbar sind. Jede Temperaturerhöhung kann dann einem einzelnen Molekül oder Cluster von Molekülen zugeordnet werden und die Lage dieses einzelnen Moleküls oder Clusters von Molekülen kann aus der Lage der Temperaturerhöhung in der Probe mit einer besseren Ortsauflösung als der Beugungsgrenze registriert werden.

Bei einer speziellen Ausführungsform der vorliegenden Erfindung, die sich an dem Konzept der SPARSE-Technik orientiert, wird nur ein einziges elektromagnetisches Signal auf die jeweilige Probe gerichtet. Dieses Signal wird von einzelnen Molekülen oder Clustern von Molekülen der Substanz, mit der die interessierende Struktur in der Probe markiert ist, absorbiert, die spontan, d.h. aufgrund thermischer Anregung schon bei der Ausgangstemperatur der Probe, und/oder in Folge der globalen Erwärmung der Probe durch das eine elektromagnetische Signal in den absorbierenden ersten Zustand gelangt sind. Das eine elektromagnetische Signal dient auch zum Detektieren der daraus resultierenden lokalen Temperaturerhöhungen der Probe und überführt die derart gemessenen Moleküle oder Cluster von Molekülen der Substanz letztlich im Sinne eines Bleichens in einen dritten Zustand, in dem die Substanz das elektromagnetische Signal nicht mehr absorbiert und aus dem die Substanz auch nicht mehr in den absorbierenden zweiten Zustand zurück gelangt. Ein zusätzliches erstes elektromagnetisches Signal, das auf die Probe gerichtet wird, um mittels diesem den Anteil der Substanz in der Probe in dem ersten absorbierenden Zustand einzustellen, entfällt dann zwar; es kann aber in der thermischen Anregung der Probe gesehen werden. Wenn diese thermische Anregung auf dem einen elektromagnetischen Signal beruht, das dann auch von der Substanz in dem ersten Zustand absorbiert wird, stellt dieses eine elektromagnetische Signal im Sinne der Patentansprüche sowohl das erste als auch das zweite elektromagnetische Signal dar.

Als Substanz zur Markierung der Struktur der Probe kommen insbesondere photochrome Farbstoffe in Frage, die beim Verändern ihres Zustands mittels des ersten Signals für das zweite Signal einen stark veränderten Absorptionsquerschnitt aufweisen.

Die Substanz kann auch aus einer Gruppe von Substanzen ausgewählt werden, die in dem ersten Zustand zusätzlich andere Fluoreszenzeigenschaften als in dem zweiten Zustand aufweisen. Vorzugsweise handelt es sich dabei um solche Substanzen, die in dem ersten Zustand schwach fluoreszent sind und in dem zweiten Zustand nicht fluoreszent sind. Dabei kann das zweite elektromagnetische Signal oder auch ein anderes elektromagnetisches Signal die Substanz zur Emission von Fluoreszenzlicht anregen, mit dem die Verteilung der Substanz bzw. die mit ihr markierte Struktur in der Probe über einen zweiten Kanal abbildbar ist.

Besonders bevorzugt wird das zweite elektromagnetische Signal in Pulsen mit hoher Intensitätsdichte auf die Probe aufgebracht, wobei die vorübergehende lokale Temperaturerhöhung der Probe unmittelbar nach jedem Puls des zweiten elektromagnetischen Signals detektiert wird. Auf dieses Weise ist es möglich, vorübergehend einen sehr hohen Temperaturgradienten aufgrund der lokalen Temperaturerhöhung der Probe in der Probe auszubilden. Entsprechend ist der Effekt in Bezug auf die Phasenverschiebung des elektromagnetischen Signals, das zur Detektion der lokalen Temperaturerhöhung verwendet wird, besonders groß. Gleichzeitig wird durch das gepulste zweite elektromagnetische Signal im Mittel aber nur wenig Wärmeenergie in die Probe eingetragen, so dass auch das Beobachten von lebenden biologischen Proben möglich ist, ohne diese thermisch zu zerstören.

Grundsätzlich kann das zweite elektromagnetische Signal auch moduliert sein, wenn es auf die Probe aufgebracht wird, um hierdurch die Voraussetzungen für die Anwendung der PHI-Technik zu schaffen.

Die neue Vorrichtung weist einen Detektor auf, mit dem mindestens eine aus dem größeren Absorptionsquerschnitt der Substanz in dem ersten Zustand resultierende lokale Temperaturerhöhung der Probe beim Beaufschlagen mit dem zweiten elektromagnetischen Signal detektierbar ist. Für das erste und das zweite elektromagnetische Signal weist die neue Vorrichtung entsprechende Signalquellen auf. Zusätzlich kann eine dritte Signalquelle für ein drittes elektromagnetisches Signal vorgesehen sein, anhand dessen Phasenverschiebung der Detektor die lokalen Temperaturerhöhungen der Probe detektiert. Der Detektor kann aber auch dazu vorgesehen sein, hierfür das erste oder das zweite elektromagnetische Signal von der ersten bzw. zweiten Signalquelle zu verwenden.

Die Signalquellen sind vorzugsweise solche, die monochromatische optische Signale, beispielsweise in Form von Laserstrahlen liefern. Dabei unterscheiden sich das erste und das zweite Signal bei den meisten Ausführungsformen der vorliegenden Erfindung ebenso wie ein eventuelles drittes Signal durch unterschiedliche Wellenlängen.

Weitere Aspekte der neuen Vorrichtung wurden bereits anhand des neuen Verfahrens erläutert.

Wenn die Probe auf eine bestimmte Temperatur, bei der sie eine besonders hohe spezifische Brechungsindexänderung mit der Temperatur aufweist, temperiert werden soll, ist dazu eine Temperiereinrichtung für die Probe vorzusehen. Wenn die Struktur in der Probe zusätzlich mit Fluoreszenzlicht von der Substanz in dem ersten Zustand abgebildet werden soll, so ist ein Fluoreszenzlichtdetektor zum ortsaufgelösten Detektieren von Fluoreszenzlicht von der Probe vorzusehen. Dieser Fluoreszenzlichtdetektor kann mit dem Detektor für das Detektieren lokaler Temperaturerhöhungen der Probe zusammengefasst sein.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden anhand von verschiedenen Ausführungsbeispielen näher erläutert und beschrieben.
- **Fig. 1**: zeigt den grundsätzlichen Aufbau einer ersten Ausführungsform der neuen Vorrichtung zur Durchführung des neuen Verfahrens mit drei Signalquellen.
- **Fig. 2**: zeigt eine zweite Ausführungsform der neuen Vorrichtung zur Durchführung des neuen Verfahrens, ebenfalls mit drei Signalquellen.
- **Fig. 3**: zeigt eine dritte Ausführungsform der neuen Vorrichtung zur Durchführung des neuen Verfahrens mit zwei Signalquellen.
- **Fig. 4**: zeigt eine vierte Ausführungsform der neuen Vorrichtung zur Durchführung des neuen Verfahrens, ebenfalls mit zwei Signalquellen.

### FIGURENBESCHREIBUNG

In S. Berciaud et al.: "Photothermal heterodyne imaging of individual metallic nanoparticles: Theory versus experiment" in PHYSICAL REVIEW B 73, 045424 (2006) ist berichtet worden, dass Goldnanopartikel von 1,4 nm Größe (67 Atome) durch die PHI-Technik detektiert werden können. Der Absorptionsquerschnitt von photochromen Farbstoffen bei der von ihnen maximal absorbierten Wellenlänge liegt in derselben Größenordnung wie derjenige von Goldatomen in einem Cluster. Entsprechend können zumindest solche Bereiche einer mit einem photochromen Farbstoff markierten Struktur gemäß dem neuen Verfahren photothermisch abgebildet werden, die einige 10 Moleküle des photochromen Farbstoffs in dem ersten Zustand aufweisen. Bei einer hinreichend hohen Konzentration des photochromen Farbstoffs ist diese Bedingung auch dann unkritisch, wenn der photochrome Farbstoff in der Probe mittels des ersten elektromagnetischen Signals jeweils bis auf einen Bereich aus dem ersten Zustand in den zweiten Zustand mit dem kleineren Absorptionsquerschnitt überführt wird, der kleinere Abmessungen als die Beugungsgrenze aufweist. Es kommt dann nur darauf an, dass in dem jeweiligen Bereich die Struktur in der Probe gegebenenfalls mit mehr als etwa einigen 10 Farbstoffmolekülen markiert ist. '

Einzelne herkömmliche Farbstoffmoleküle in dem stärker absorbierenden ersten Zustand wurden mit bekannten photothermischen Abbildungstechniken zwar noch nicht detektiert, es erscheint aber sowohl möglich, photochrome Farbstoffe mit besonders großem Absorptionsquerschnitt eines einzelnen Moleküls zu selektieren, als auch Cluster von photochromen Farbstoffmolekülen auszubilden, die mittels des ersten Signals entweder als ganzes oder gar nicht aus dem zweiten Zustand in den stärker absorbierenden ersten Zustand überführt werden. Weiterhin erscheint es möglich, die mit einer Temperaturerhöhung einhergehende Brechungsindexänderung durch optimierte Auswahl des Mediums und seiner Temperatur zu maximieren. Darüber hinaus ist davon auszugehen, dass die Empfindlichkeit photothermischer Abbildungstechniken weiter ansteigt, und zwar durch Verwendung noch empfindlicher Detektoren und elektromagnetischer Signal, die besser an die Anforderungen der Temperaturmessung angepasst sind. So ist es praktisch möglich, das neue Verfahren auch in Form einer Variante der SPARSE-Technik durchzuführen, bei der nur einzelne Moleküle bzw. Cluster von Molekülen mittels des ersten Signals in den stärker absorbierenden Zustand überführt werden, die soweit voneinander entfernt sind, dass sie beim photothermischen Abbilden auf einen zweidimensionalen Photosensor getrennt voneinander abgebildet werden.

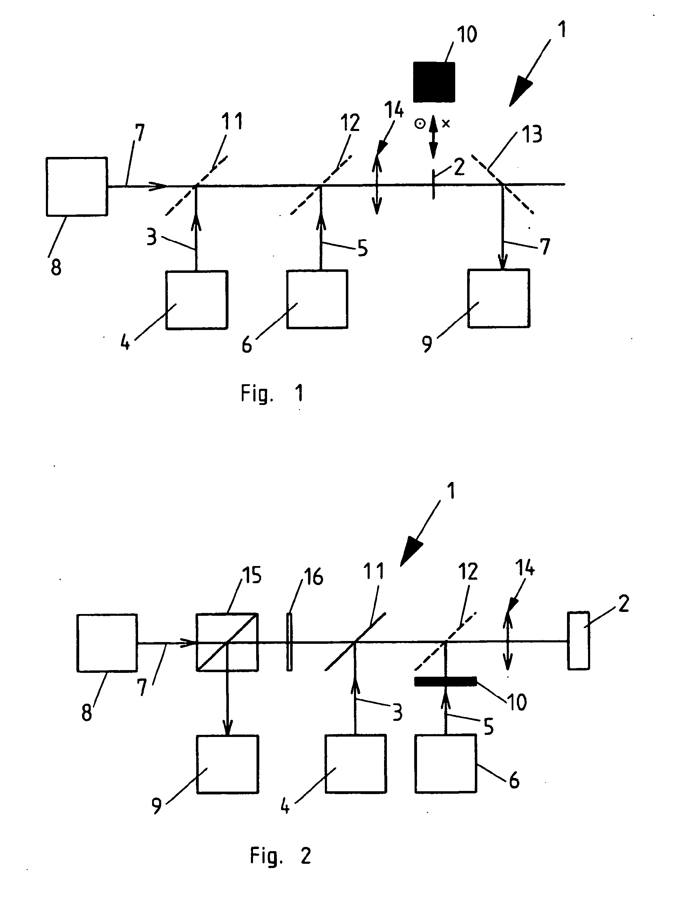

**Fig. 1** zeigt den grundsätzlichen Aufbau einer Vorrichtung 1 zur Durchführung des neuen Verfahrens. D. h., die Vorrichtung 1 dient zum Abbilden einer Struktur in einer Probe 2. Die hier nicht separat wiedergegebene Struktur in der Probe 2 ist dabei mit einer Substanz, hier einem photochromen Farbstoff markiert, der zwei Zustände aufweist. In dem ersten Zustand ist ein Absorptionsquerschnitt jedes Moleküls viel größer, d. h. mindestens zehnmal, vorzugsweise mindestens einhundert Mal größer als in seinem zweiten Zustand. Diese unterschiedlichen Absorptionsquerschnitte beziehen sich auf ein elektromagnetisches Signal 3, bei dem es sich um ein monochromatisches optisches Signal in Form eines Laserstrahls handelt, von einer Signalquelle 4, d. h. einem Laser. Aus seinem ersten Zustand mit dem großen Absorptionsquerschnitt ist der photochrome Farbstoff mit einem elektromagnetischen Signal 5, bei dem es sich ebenfalls um ein monochromatisches optisches Signal in Form eines Laserstrahls handelt, von einer Signalquelle 6, d. h. einem Laser, überführbar. Dabei erfolgt die Überführung in einem jeweiligen Messbereich der Probe 2 bis auf einen aktuell interessierenden Bereich, so dass sich der photochrome Farbstoff nur noch in diesem interessierenden Bereich in seinem Zustand mit dem großen Absorptionsquerschnitt befindet. Zu diesem Zweck wird das elektromagnetische Signal 5 im Bereich der Probe 2 so mit sich selbst überlagert, dass es am Ort des interessierenden Bereichs eine Nullstelle seiner Intensitätsverteilung ausbildet, während es den weiteren Messbereich mit einer so großen Intensität abdeckt, dass der Farbstoff mit hoher Wahrscheinlichkeit in seinen zweiten Zustand überführt wird. Konkret kann die Intensitätsverteilung des elektromagnetischen Signals 5 im Bereich der Probe 2 Doughnut-förmig sein, wobei im Zentrum des Doughnuts die Nullstelle der Intensitätsverteilung des elektromagnetischen Signals 5 gegeben ist. Wenn jetzt der Messbereich mit dem elektromagnetischen Signal 3 von der Signalquelle 4 beaufschlagt wird, kann das Signal 3 nur von solchen Molekülen des photochromen Farbstoffs absorbiert werden, die sich im Bereich der Nullstelle der Intensitätsverteilung des elektromagnetischen Signals 5 befinden, da alle anderen Moleküle des photochromen Farbstoffs in dem Messbereich mit dem elektromagnetischen Signal 5 in den nicht absorbierenden Zustand überführt wurden. Hieraus resultiert eine lokale Temperaturerhöhung der Probe 2, die von der Konzentration des photochromen Farbstoffs im Bereich der Nullstelle der Intensitätsverteilung des elektromagnetischen Signals 5 abhängt. Diese lokale Temperaturerhöhung wird in der Vorrichtung 1 photothermisch abgebildet, indem ein weiteres elektromagnetisches Signal 7 wieder in Form eines monochromatischen optischen Signals, konkret eines Laserstrahls von einer Signalquelle 8, d. h. einem Laser, auf die Probe 2 gerichtet wird. Das elektromagnetische Signal 7 läuft durch den Messbereich in der Probe 2 und trifft hinter der Probe 2 auf einen Detektor 9. Mit dem Detektor 9 wird registriert, ob sich eine Phasenverschiebung des elektromagnetischen Signals 7 aufgrund eines Temperaturgradienten in der Probe 2 ergibt, der auf eine lokale Temperaturerhöhung der Probe 2 in Folge der Absorption des elektromagnetischen Signals 3 am Ort der Nullstelle der Intensitätsverteilung des elektromagnetischen Signals 5 zurückgeht. Mit dem Detektor 9 ist auch die Größe des Gradienten und damit die Größe der Temperaturerhöhung und damit letztlich die Konzentration des photochromen Farbstoffs am Ort der Nullstelle des elektromagnetischen Signals 5 registrierbar. Wenn die Probe 2 mit einer Scanneinrichtung 10 derart zweidimensional verschoben wird, dass mit der Nullstelle der Intensitätsverteilung des elektromagnetischen Signals 5, wobei auch eine Vielzahl derartiger Nullstellen vorgesehen sein kann, die gesamte Probe 2 abgetastet wurde, entsteht ein Abbild der Intensitätsverteilung des photochromen Farbstoffs in der Probe 2. Auf diese Weise wird die mit dem photochromen Farbstoff markierte Struktur in der Probe abgebildet.

Gegenüber der Verwendung eines fluoreszenten Farbstoffs ergeben sich dabei erhebliche Vorteile in Bezug auf die Größe und damit das Signal-zu-Rauschverhältnis des Messsignals. Ein Molekül eines fluoreszenten Farbstoffs kann immer nur dann, wenn es sich in seinem Grundzustand befindet, mit Anregungslicht zu Fluoreszenz angeregt werden. Bis zu einer nächstmöglichen Anregung, die frühestens nach 1 bis 5 ns erfolgen kann, muss gewartet werden, bis das Molekül in seinen Grundzustand zurückgekehrt ist. Ob es bei dieser Rückkehr in seinen Grundzustand Fluoreszenzlicht aussendet, hängt von dem Verhältnis seiner Übergangswahrscheinlichkeiten ab; meistens beträgt die Fluoreszenz-Quanteneffizienz der Anregung weniger als 50 %. Hinzu kommt, dass sich das fluoreszente Molekül regelmäßig in einem langlebigen Dunkelzustand, wie zum Beispiel dem Triplettzustand, verfängt, in dem es 1µs bis einige Sekunden verharrt, ohne in der Lage zu sein, zum Fluoreszenzsignal beizutragen. Mit welcher Wahrscheinlichkeit das Fluoreszenzlicht auch im Gerät detektiert wird, hängt von dem jeweiligen Messaufbau ab; sie beträgt meistens weniger als 10 %. In jedem Fall ist die Ausbeute an Photonen je Molekül des fluoreszenten Farbstoffs pro Zeiteinheit eng begrenzt. Hinzu kommt die Gefahr, dass der fluoreszente Farbstoff in Folge der mehrfachen Anregung durch das Anregungslicht gebleicht wird. Demgegenüber wird bei dem hier geschilderten neuen Verfahren der photochrome Farbstoff mit dem elektromagnetischen Signal 3 zwar auch angeregt, diese Anregung wird aber sehr kurzfristig (binnen weniger als 2 ps) in Wärme umgewandelt und jedes Farbstoffmolekül steht damit sofort wieder für eine erneute Anregung mit dem elektromagnetischen Signal 3 zur Verfügung. Das ultraschnelle Relaxieren des Moleküls wirkt einer chemischen Veränderung entgegen, weil diese nur aus einem angeregten Zustand heraus stattfinden kann, der aber bereits binnen weniger als 2 ps zerfällt. So kann in extrem kurzer Zeit eine große Zahl von Photonen aus dem zweiten elektromagnetischen Signal absorbiert werden und eine lokale Temperaturerhöhung in der Probe 2 hervorgerufen werden. Beispielsweise kann das elektromagnetische Signal 3 gepulst sein, und während jedes Pulses erfolgt bereits eine Vielzahl von Anregungen jedes in dem absorbierenden Zustand befindlichen Farbstoffmoleküls, die in eine Temperaturerhöhung der Probe resultiert, die nach jedem einzelnen Puls erfassbar ist. Zum Erfassen dieser Temperaturerhöhung findet mit dem elektromagnetischen Signal 7 ebenfalls ein viel stärkeres Signal Verwendung, als es durch Fluoreszenzlicht bereitgestellt wird.

Dabei bleiben alle wesentlichen Vorteile erhalten, die mit der Markierung einer Struktur in einer Probe mit einem Fluoreszenzfarbstoff verbunden sind. Die selektive Markierung eines bestimmten Zellbestandteils, wie eines Proteins, ist weiterhin durch die Spezifizität der Substanz gegeben. Auch können Mehrfachmarkierungen durchgeführt werden, da Marker mit unterschiedlichen Absorptionsspektren gewählt werden können. Ebenso können zellendogene Markierungen verwendet werden, wie zum Beispiel Proteine oder Proteinabschnitte, die bei bestimmten Wellenlängen eine besonders starke Absorption aufweisen. Einer der wichtigsten Marker der Fluoreszenzmikroskopie, insbesondere für lebende Zellen, ist das Grün-Fluoreszierende-Protein (GFP) und die davon abgeleiteten Derivate, weil sie sich so gut wie an jedes Protein biochemisch fusionieren lassen. Bei fluoreszierenden Proteinen ist es wichtig, dass diese auf hohe Fluoreszenzquantenausbeute optimiert sind, d.h. dass die Anregungsenergie möglichst in Fluoreszenzlicht und nicht in Wärme umgewandelt wird - was eher schwer zu bewerkstelligen ist. Im Gegenteil führen Stöße mit der Umgebung des Moleküls (z. B. Wassermolekülen) zu einer in der Fluoreszenzmikroskopie ungewollt effizienten Umwandlung der Anregungsenergie in Wärme. Es ist daher viel schwieriger ein gut fluoreszentes Protein zu erzeugen oder zu finden als ein nicht fluoreszierendes, d.h. eines das die Anergungsenergie gut in Wärme umwandelt. Dies gilt auch für photochrome (schaltbare) Proteine. Ein Vorteil der hier beschriebenen Erfindung ist, dass dieser Nachteil in einen Vorteil umgewandelt wird, weil die Umwandlung in Wärme hier sogar erwünscht ist. Sie führt nicht nur zum schnellen Aufheizen der Mikroumgebung der Substanz in der Probe, sondern führt das Molekül schnell in den absorbierenden Grundzustand zurück, in dem es wieder Energie aus dem elektromagnetischen Signal 3 aufnehmen kann. Genauso ist es eher schwieriger organische Fluoreszenzmarker zu finden, die sowohl schaltbar als auch fluoreszent sind, denn die meisten optisch schaltbaren (photochromen) organischen Verbindungen sind nicht fluoreszent, sondern ändern nur ihr Absorptionsspektrum. Dagegen können sie ihre Energie effizient in Wärme umwandeln.

Nichtsdestotrotz kann es bei der Anwendung der vorliegenden Erfindung von Vorteil sein, eine Substanz für die Markierung der Struktur in der Probe auszuwählen, die neben einer hohen Umwandlungsrate der absorbierten Photonenergie in Wärme in ihrem ersten Zustand immerhin noch eine messbare Quantenausbeute an Fluoreszenz aufweist. Damit hat man einen weiteren Messkanal zur Verfügung, in welchem die Substanz durch eine Fluoreszenzabbildung erfasst werden kann.

Bei sachgerechter Abstimmung der Wellenlängen der elektromagnetischen Signale 3 und 7 sowie 5 besteht trotz der beim Absorbieren des elektromagnetischen Signals 3 vielfachen Anregung wegen der nur sehr geringen Lebensdauer des angeregten Zustands keine nennenswerte Gefahr eines Bleichens des photochromen Farbstoffs.

Die Rückkehr des photochromen Farbstoffs aus seinem zweiten Zustand zurück in seinen ersten Zustand, die so schnell erfolgen muss, dass ein Scannen der Probe 2 mit der Scanneinrichtung 10 möglich ist, erfolgt hier spontan. Sie kann aber durch ein weiteres, hier nicht gezeigtes elektromagnetisches Signal angeregt werden. Ebenso ist es denkbar, dass eines der elektromagnetischen Signale 3 und 7 diese Rückführung anregt.

Zur Zusammenführung bzw. Trennung der verschiedenen elektromagnetischen Signale 3, 5 und 7 weist die Vorrichtung 1 dichroitische Spiegel 11, 12 und 13 auf, die auf die jeweiligen Wellenlängen abgestimmt sind. Ein Objektiv 14 fokussiert die elektromagnetischen Signale 3, 5 und 7 auf die Probe 2. Ein weiteres, hier nicht dargestelltes Objektiv ist regelmäßig auch zwischen der Probe 2 und dem Detektor 6 vorgesehen.

Während Fig. 1 den Detektor 9 in Bezug auf die Signalquellen 4, 6 und 8 hinter der Probe 2 aufweist, ist er bei der Ausführungsform der Vorrichtung 1 gemäß **Fig. 2** nicht in einer Transmissions- sondern in einer Reflektionsanordnung vorgesehen. Zur Umlenkung des reflektierten elektromagnetischen Signals 7 zu dem Detektor 9 ist dabei ein polarisierender Strahlteiler 15 in Verbindung mit einer Lambda/4-Platte 16 vorgesehen. Dabei kann das elektromagnetische Signal 3 mit einem hier nicht dargestellten Modulator bezüglich seiner Intensität über der Zeit moduliert werden, um die Voraussetzungen für eine PHI-Technik beim thermischen Abbilden der lokalen Temperaturerhöhungen in der Probe 2 zu schaffen. Weiterhin ist die Scaneinrichtung 10 hier so ausgebildet, dass sie nicht die Probe 2 gegenüber den elektromagnetischen Signalen 3, 5 und 7, sondern das elektromagnetische Signal 5, das den Bereich des Farbstoffs in dem absobierenden Zustand festlegt, gegenüber der Probe 2 bewegt. Die Scaneirichtung 10 kann dazu beispielsweise ein von einem Galvanometerscanner bewegtes optisches Element oder auch einen so genannten Spatial Light Modulator und die jeweils zugehörigen, dem Fachmann bekannten weiteren Bauteile einer solchen Scaneinrichtung, insbesondere Linsen zur Anpassung der Abbildung, aufweisen. Ansonsten ist aber die Funktionsweise der Vorrichtung 1 gemäß Fig. 2 grundsätzlich dieselbe wie derjenigen gemäß Fig. 1.

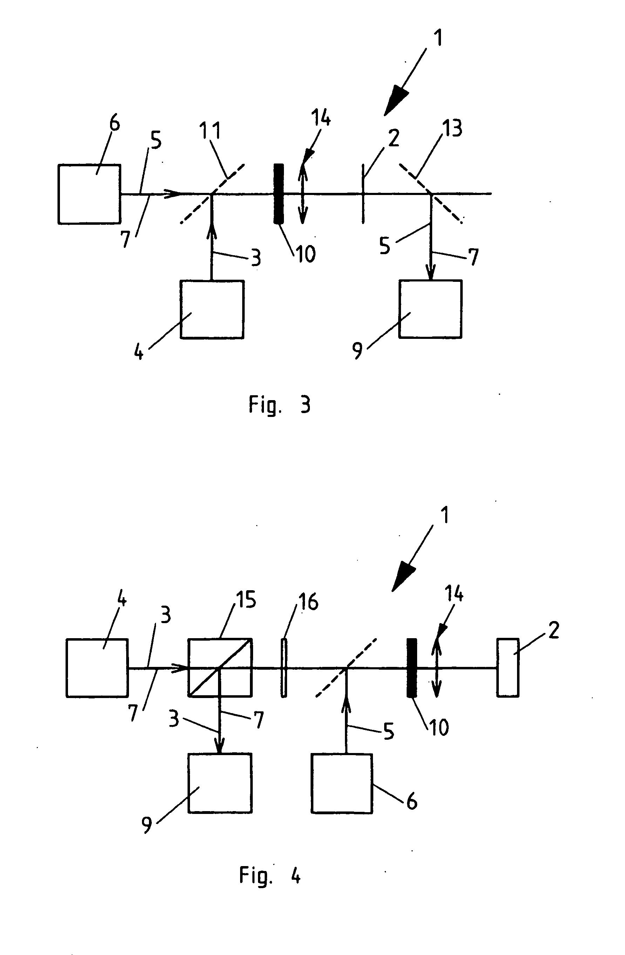

Die Vorrichtung 1 gemäß **Fig. 3** weist den Detektor 9 wieder in einer Transmissionsanordnung auf. Zudem ist hier auf eine separate Signalquelle 8 für das elektromagnetische Signal 7 verzichtet. Stattdessen wird hier die lokale Temperaturerhöhung der Probe 2 dadurch erfasst, dass mit dem Detektor 9 das elektromagnetische Signal 5 auf Phasenverschiebungen hin beobachtet wird. Konkret kann mit dem Detektor 9 erfasst werden, ob sich eine Doughnutförmige Intensitätsverteilung des elektromagnetischen Signals 5 im Bereich der Probe 2 in Folge des elektromagnetischen Signals 3, d. h. in Folge einer hieraus resultierenden lokalen Temperaturerhöhung deformiert. Dabei kann das elektromagnetische Signal 3 wieder moduliert sein, um festzustellen, ob hinter der Probe 2 eine entsprechende Modulation des elektromagnetischen Signals 5 gegeben ist, die auf eine modulierte lokale Temperaturerhöhung der Probe 2 bzw. einen modulierten Temperaturgradienten in der Probe 2 hinweist. Die Größe der Modulation des elektromagnetischen Signals 5 hinter der Probe 2 gibt dabei einen Hinweis auf die Größe der Temperaturerhöhung und damit auf die Konzentration des photochromen Farbstoffs im Bereich der Nullstelle der Intensitätsverteilung des elektromagnetischen Signals 5. Die Scaneinreichtung 10 ist hier von der Probe 2 aus direkt hinter dem Objektiv 14 angeordnet und bewegt synchron alle elektromagnetischen Signale 3, 5 und 7, die auf die Probe 2 gerichtet werden, gegenüber der Probe 2. So können alle elektromagnetischen Signale 3, 5 und 7, die auf die Probe 2 gerichtet werden, auf den jeweiligen Messbereich der Probe 2 konzentriert werden.

Bei der Ausführungsform der Vorrichtung 1 gemäß **Fig. 4** ist der Detektor 9 wie in Fig. 2 in einer Reflektionsanordnung vorgesehen. Entsprechend gibt es hier wieder den Polarisationsstrahlteiler 15 und die Lambda/4-Platte 16. Hier ist jedoch auf die zusätzliche Signalquelle 8 für das elektromagnetische Signal 7 verzichtet, indem das elektromagnetische Signal 3, mit dem die Probe 2 zunächst dort, wo sich der photochrome Farbstoff in seinem ersten, stark absorbierenden Zustand befindet, lokal erwärmt wird, auch zum Detektieren dieser Erwärmung verwendet wird. Hierbei macht man sich einen Effekt zu Nutze, der als thermische Linse bekannt ist. Der von dem elektromagnetischen Signal 3 selbst in der Probe 2 hervorgerufene Temperaturgradient bewirkt eine Phasenverschiebung des elektromagnetischen Signals 3, die mit dem Detektor 9 feststellbar ist. Die Scaneinreichtung 10 ist grundsätzlich wie in Figur 3 ausgebildet. Sie verschiebt hier dabei auch das von der Probe zurückkommende Licht, so dass dieses unabhängig von dem jeweiligen Messbereich der Probe 2 immer auf denseben Bereich des Detektors 9 fällt.

### BEZUGSZEICHENLISTE

- 1: Vorrichtung
- 2: Probe
- 3: elektromagnetisches Signal
- 4: Signalquelle
- 5: elektromagnetisches Signal
- 6: Signalquelle
- 7: elektromagnetisches Signal
- 8: Signalquelle
- 9: Detektor
- 10: Scanneinrichtung
- 11: dichroitischer Spiegel
- 12: dichroitischer Spiegel
- 13: dichroitischer Spiegel
- 14: Objektiv
- 15: Polarisationsstrahlteiler
- 16: LambdaNiertel-Platte

## Patentansprüche

1. Verfahren zum räumlich hochaufgelösten Abbilden einer Struktur In einer Probe,
- wobei eine Substanz aus einer Gruppe von Substanzen ausgewählt wird,
- die mit einem ersten elektromagnetischen Signal aus einem ersten Zustand, in dem sie einen größeren Absorptionsquerschnitt für ein zweites elektromagnetisches Signal aufweisen, in einen zweiten Zustand, in dem sie einen kleineren Absorptionsquerschnitt für das zweite elektromagnetische Signal aufweisen, überführbar sind oder
- die mit einem ersten elektromagnetischen Signal In einen ersten Zustand, in dem sie einen größeren Absorptionsquerschnitt für ein zweites elektromagnetisches Signal aufweisen, aus einem zweiten Zustand, in dem sie einen kleineren Absorptionsquerschnitt für das zweite elektromagnetische Signal aufweisen, überführbar sind,
- wobei die Struktur mit der Substanz markiert wird,
- wobei mittels des ersten elektromagnetischen Signals eine räumliche Verteilung eines Anteils der Substanz In dem ersten Zustand eingestellt wird, bei der mindestens ein Bereich, in dem die Substanz in dem ersten Zustand vorliegt, räumlich begrenzt ist, und
- wobei die Probe nach der Einstellung der räumlichen Verteilung des Anteils der Substanz in dem ersten Zustand mittels des ersten elektromagnetischen Signals mit dem zweiten elektromagnetischen Signal beaufschlagt wird,
**dadurch gekennzeichnet, dass** mindestens eine aus dem größeren Absorptionsquerschnitt der Substanz in dem ersten Zustand beim Beaufschlagen mit dem zweiten elektromagnetischen Signal (3) resultierende lokale Temperaturerhöhung der Probe (2) detektiert wird.

2. Verfahren nach Anspruch 1, **dadurch gekennzeichnet, dass** die mindestens eine lokale Temperaturerhöhung der Probe (2) anhand einer mit ihr verbundenen Phasenverschiebung
- des ersten elektromagnetischen Signals (5),
- des zweiten elektromagnetischen Signals (3) oder
- eines zusätzlichen dritten elektromagnetischen Signals (7) detektiert wird.

3. Verfahren nach einem der Ansprüche 1 und 2, **dadurch gekennzeichnet, dass** mindestens eines der elektromagnetischen Signale (3, 5, 7) ein monochromatisches optisches Signal ist.

4. Verfahren nach Anspruch 3, **dadurch gekennzeichnet, dass** die mindestens eine lokale Temperaturerhöhung der Probe (2) durch optische Fernfeldinterferenzmikroskopie detektiert wird.

5. Verfahren nach einem der Ansprüche 1 bis 4, **dadurch gekennzeichnet, dass** eine Höhe und/oder eine Lage der mindestens einen lokalen Temperaturerhöhung in der Probe (2) registriert wird.

6. Verfahren nach Anspruch 5, **dadurch gekennzeichnet, dass** der Schwerpunkt der Lage der mindestens einen lokalen Temperaturerhöhungen in der Probe (2) mit einer Ortaauflösung registriert wird, die besser als die Beugungsgrenze ist.

7. Verfahren nach einem der Ansprüche 1 bis 6, **dadurch gekennzeichnet, dass** die Substanz aus einer Gruppe von Substanzen ausgewählt wird, die In dem ersten Zustand einen mindestens zehnmal, vorzugsweise mindestens einhundertmal größeren Absorptionsquerschnitt für das zweite elektromagnetische Signal aufweisen als In dem zweiten Zustand.

8. Verfahren nach einem der Ansprüche 1 bis 7, **dadurch gekennzeichnet, dass** die Substanz In ein Medium, vorzugsweise ein organisches flüssiges Medium eingebettet wird, das eine größere spezifische Brechungsindexänderung mit der Temperatur aufweist als Wasser.

9. Verfahren nach einem der Ansprüche 1 bis 8, **dadurch gekennzeichnet, dass** die Probe auf eine Temperatur temperiert wird, bei der sie eine maximale Brechungsindexänderung mit der Temperatur aufweist.

10. Verfahren nach einem der Ansprüche 1 bis 9, **dadurch gekennzeichnet, dass** die Substanz aus einer Gruppe von Substanzen ausgewählt wird, die wiederholt mittels des ersten elektromagnetischen Signals aus dem ersten Zustand in den zweiten Zustand überführbar sind, wobei mit dem ersten optischen Signal eine räumliche Verteilung eines Anteile der Substanz in dem ersten Zustand eingestellt wird, bei der sich nur solche Anteile der Substanz In dem ersten Zustand befinden, die sich am Ort einer durch destruktive Überlagerung gebildeten Nullstelle des ersten Signals befinden.

11. Verfahren nach einem der Ansprüche 1 bis 9, **dadurch gekennzeichnet, dass** die Substanz aus einer Gruppe von Substanzen ausgewählt wird, die mittels des ersten elektromagnetischen Signals mindestens einmal aus dem zweiten Zustand In den ersten Zustand überführbar sind, wobei mit dem ersten optischen Signal eine räumliche Verteilung eines Anteils der Substanz in dem ersten Zustand eingestellt wird, bei der sich nur einzelne Moleküle oder Cluster von Molekülen der Substanz In dem ersten Zustand befinden, die so welt voneinander beabstandet sind, dass die von ihnen beim Beaufschlagen der Substanz mit dem zweiten Signal ausgehenden lokalen Temperaturerhöhungen der Probe (2) in einer Abbildung auf einen zweidimensionalen Photosensor getrennt voneinander detektierbar sind.

12. Verfahren nach einem der Ansprüche 1 bis 11, **dadurch gekennzeichnet, dass** die Substanz aus der Gruppe der photochromen Farbstoffe ausgewählt wird.

13. Verfahren nach einem der Ansprüche 1 bis 12, **dadurch gekennzeichnet, dass** die Substanz aus einer Gruppe von Substanzen ausgewählt wird, die In dem ersten Zustand zusätzlich andere Fluoreszenzeigenschaften als in dem zweiten Zustand aufweisen, vorzugsweise In dem ersten Zustand fluoreszent sind und in dem zweiten Zustand nicht fluoreszent sind.

14. Verfahren nach einem der Ansprüche 1 bis 13, **dadurch gekennzeichnet, dass** das zweite elektromagnetische Signal (3) in Pulsen mit hoher Intensitätsdichte auf die Probe (2) aufgebracht und dass die vorübergehende lokale Temperaturerhöhung der Probe (2) unmittelbar nach Jedem Puls des zweiten elektromagnetischen Signals (3) detektiert wird.

15. Vorrichtung zur Durchführung des Verfahrens nach einem der Ansprüche 1 bis 14 zum räumlich hochaufgelösten Abbilden einer Struktur in einer Probe, die mit einer Substanz markiert ist, welche aus einer Gruppe von Substanzen ausgewählt ist, die mit einem ersten elektromagnetischen Signal aus einem ersten Zustand, in dem sie einen größeren Absorptionsquerschnitt für ein zweites elektromagnetisches Signal aufweisen, in einen zweiten Zustand, in dem sie einen kleineren Absorptionsquerschnitt für das zweite elektromagnetische Signal aufweisen, überführbar sind oder die mit einem ersten elektromagnetischen Signal in einen ersten Zustand, in dem sie einen größeren Absorptionsquerschnitt für ein zweites elektromagnetisches Signal aufweisen, aus einem zweiten Zustand, in dem sie einen kleineren Absorptionsquerschnitt für das zweite elektromagnetische Signal aufweisen, überführbar sind, wobei die Vorrichtung aufweist:
- eine erste Signalquelle für das erste elektromagnetischen Signal, mit der eine räumliche Verteilung eines Anteils der Substanz In dem ersten Zustand einstellbar ist, bei der mindestens ein Bereich, in dem die Substanz in dem ersten Zustand vorliegt, räumlich begrenzt Ist, und
- eine zweite Signalquelle für das zweite elektromagnetische Signal, mit der die Probe nach der Einstellung der räumlichen Verteilung des Anteils der Substanz in dem ersten Zustand mittels des ersten elektromagnetischen Signals mit dem zweiten elektromagnetischen Signal beaufschlagbar ist,
**gekennzeichnet durch** einen Detektor (9), mit dem mindestens eine aus dem größeren Absorptionsquerschnitt der Substanz In dem ersten Zustand resultierende lokale Temperaturerhöhung der Probe (2) detektierbar Ist.

## Claims

1. Method for high spatial resolution imaging of a structure in a sample,
- wherein a substance is selected from a group of substances,
- which are transferable by means of a first electromagnetic signal out of a first state in which they comprise a larger absorption cross section for a second electromagnetic signal into a second state in which they comprise a smaller absorption cross section for the second electromagnetic signal, or
- which are transferable by means of a first electromagnetic signal into a first state in which they have a larger absorption cross section for a second electromagnetic signal out of a second state in which they have a smaller absorption cross section for the second electromagnetic signal,
- wherein the structure is marked with the substance,
- wherein, by means of the first electromagnetic signal, a spatial distribution of a portion of the substance in the first state is adjusted, wherein at least one area of the spatial distribution in which the substance is in the first state is spatially limited, and
- wherein the second electromagnetic signal is applied to the sample after adjusting the spatial distribution of the portion of the substance in the first state by means of the first electromagnetic signal,
**characterised in that** at least one local increase in temperature of the sample (2) resulting from the larger absorption cross section of the substance in the first state when applying the second electromagnetic signal (3) is detected.

2. Method of claim 1, **characterised in that** the at least one local increase in temperature of the sample (2) is detected on the basis of an associated phase shift
- of the first electromagnetic signal (5),
- of the second electromagnetic signal (3), or
- of an additional third electromagnetic signal (7).

3. Method of any of the claims 1 and 2, **characterised in that** at least one of the electromagnetic signals (3, 5, 7) is a monochromatic optical signal.

4. Method of claim 3, **characterised in that** the at least one local increase in temperature of the sample (2) is detected by means of optical far field interference microscopy.

5. Method of any of the claims 1 to 4, **characterised in that** a height and/or a position of the at least one local increase in temperature in the sample (2) is registered.

6. Method of claim 5, **characterised in that** the centroid of the position of the at least one local increase in temperature in the sample (2) is registered at a spatial resolution which is better than the diffraction barrier.

7. Method of any of the claims 1 to 6, **characterised in that** the substance is selected from a group of substances which comprise an absorption cross-section for the second electromagnetic signal in the first state which is at least tenfold, preferably at least hundredfold larger than in the second state.

8. Method of any of the claims 1 to 7, **characterised in that** the substance is embedded into a medium, preferably an organic liquid medium, which comprises a higher variation in specific diffraction index with temperature than water.

9. Method of any of the claims 1 to 8, **characterised in that** the sample is exposed to a temperature at which it comprises a maximum variation in diffraction index with temperature.

10. Method of any of the claims 1 to 9, **characterised in that** the substance is selected from a group of substances which are repeatedly transferable out of the first state into the second state by means of the first electromagnetic signal, wherein a spatial distribution of a portion of the substance in the first state is adjusted by means of the first optical signal, in which only such portions of the substance are in the first state, that are at the position of a zero point of the first signal formed by destructive superposition.

11. Method of any of the claims 1 to 9, **characterised in that** the substance is selected from a group of substances which are transferable by means of the first electromagnetic signal at least once out of the second state into the first state, wherein a spatial distribution of a portion of the substance in the first state is adjusted by means of the first optical signal, in which only single molecules or clusters of molecules of the substance are in the first state, which are arranged at such high distances that the local increases in temperature of the sample (2) upon applying the second signal to the substance are separately detectable in an image on a two-dimensional photo sensor.

12. Method of any of the claims 1 to 11, **characterised in that** the substance is selected from the group of photochromic dyes.

13. Method of any of the claims 1 to 12, **characterised in that** the substance is selected from a group of substances which additionally comprise other fluorescence properties in the first state as compared to the second state, and which are preferably fluorescent in the first state and not fluorescent in the second state.

14. Method of any of the claims 1 to 13, **characterised in that** the second electromagnetic signal (3) is applied to the sample (2) in pulses of high intensity and that the temporal local increase in temperature of the sample (2) is detected directly after each pulse of the second electromagnetic signal (3).

15. Apparatus for carrying out the method of any of the claims 1 to 14 for spatial high resolution imaging of a structure in a sample which is marked with a substance selected from a group of substances which are transferable by means of a first electromagnetic signal out of a first state in which they comprise a larger absorption cross-section for a second electromagnetic signal into a second state in which they comprise a smaller absorption cross-section for the second electromagnetic signal, or which are transferable by means of a first electromagnetic signal into a first state in which they comprise a larger absorption cross-section for a second electromagnetic signal out of a second state in which they have a smaller absorption cross-section for the second electromagnetic signal, wherein the apparatus comprises:
- a first signal source for the first electromagnetic signal, by which a spatial distribution of a portion of the substance in the first state is adjustable, wherein at least one area of the spatial distribution in which the substance is in the first state is spatially limited, and
- a second signal source for the second electromagnetic signal, by which the second electromagnetic signal is applicable to the sample, after adjusting the spatial distribution of the portion of the substance in the first state by means of the first electromagnetic signal, **characterised by** a detector (9) by which at least one increase in temperature of the sample (2) resulting from the larger absorption cross-section of the substance in the first state is detectable.

## Revendications

1. Procédé de représentation à résolution spatiale élevée d'une structure dans un échantillon,
- une substance étant choisie dans un groupe de substances,
- qui peuvent être transformées avec un premier signal électromagnétique d'un premier état, dans lequel elles présentent une section d'absorption plus grande pour un deuxième signal électromagnétique, en un deuxième état, dans lequel elles présentent une section d'absorption plus petite pour le deuxième signal électromagnétique, ou
- qui peuvent être transformées avec un premier signal électromagnétique en un premier état, dans lequel elles présentent une section d'absorption plus grande pour un deuxième signal électromagnétique, à partir d'un deuxième état, dans lequel elles présentent une section d'absorption plus petite pour le deuxième signal électromagnétique,
- la structure étant marquée avec la substance,
- une répartition spatiale d'une fraction de la substance au premier état étant ajustée au moyen du premier signal électromagnétique, selon laquelle au moins une zone où la substance se trouve au premier état est limitée dans l'espace, et
- après l'ajustement de la répartition spatiale de la fraction de la substance au premier état au moyen du premier signal électromagnétique, l'échantillon étant exposé au deuxième signal électromagnétique,
**caractérisé en ce qu'**au moins une élévation de température locale de l'échantillon (2) résultant de la section d'absorption plus grande de la substance au premier état est détectée lors de l'exposition au deuxième signal électromagnétique (3).

2. Procédé selon la revendication 1, **caractérisé en ce que** la ou les élévations de température locales de l'échantillon (2) sont détectées à l'aide d'un décalage de phases associé avec celles-ci
- du premier signal électromagnétique (5),
- du deuxième signal électromagnétique (3) ou
- d'un troisième signal électromagnétique supplémentaire (7).

3. Procédé selon l'une quelconque des revendications 1 et 2, **caractérisé en ce qu'**au moins un des signaux électromagnétiques (3, 5, 7) est un signal optique monochromatique.

4. Procédé selon la revendication 3, **caractérisé en ce que** la ou les élévations de température locales de l'échantillon (2) sont détectées par microscopie optique interférentielle en champ lointain.

5. Procédé selon l'une quelconque des revendications 1 à 4, **caractérisé en ce qu'**une hauteur et/ou une position de la ou des élévations de température locales dans l'échantillon (2) sont enregistrées.

6. Procédé selon la revendication 5, **caractérisé en ce que** le centre de gravité de la position de la ou des élévations de température locales dans l'échantillon (2) est enregistré avec une résolution spatiale meilleure que la limite de diffraction.

7. Procédé selon l'une quelconque des revendications 1 à 6, **caractérisé en ce que** la substance est choisie dans un groupe de substances qui présentent au premier état une section d'absorption pour le deuxième signal électromagnétique au moins dix fois, de préférence au moins cent fois, plus grande qu'au deuxième état.

8. Procédé selon l'une quelconque des revendications 1 à 7, **caractérisé en ce que** la substance est incorporée dans un milieu, de préférence un milieu liquide organique, qui présente une modification spécifique de l'indice de réfraction avec la température plus grande que l'eau.

9. Procédé selon l'une quelconque des revendications 1 à 8, **caractérisé en ce que** l'échantillon est conditionné à une température à laquelle il présente une modification maximale de l'indice de réfraction avec la température.

10. Procédé selon l'une quelconque des revendications 1 à 9, **caractérisé en ce que** la substance est choisie dans un groupe de substances qui peuvent être transformées de manière répétée au moyen du premier signal électromagnétique du premier état en le deuxième état, une répartition spatiale d'une fraction de la substance au premier état étant ajustée avec le premier signal optique, selon laquelle seules les fractions de la substance qui se trouvent à l'emplacement d'un zéro du premier signal formé par une superposition destructive se trouvent au premier état.

11. Procédé selon l'une quelconque des revendications 1 à 9, **caractérisé en ce que** la substance est choisie dans un groupe de substances qui peuvent être transformées au moins une fois au moyen du premier signal électromagnétique du deuxième état en le premier état, une répartition spatiale d'une fraction de la substance au premier état étant ajustée avec le premier signal optique, selon laquelle seules des molécules individuelles ou seuls des clusters de molécules de la substance, qui sont suffisamment espacés les uns des autres pour que les élévations de températures locales de l'échantillon (2) en découlant lors de l'exposition de la substance au deuxième signal soient détectables séparément les unes des autres sur une représentation sur un photocapteur bidimensionnel, se trouvent au premier état.

12. Procédé selon l'une quelconque des revendications 1 à 11, **caractérisé en ce que** la substance est choisie dans le groupe des colorants photochromes.

13. Procédé selon l'une quelconque des revendications 1 à 12, **caractérisé en ce que** la substance est choisie dans un groupe de substances qui présentent également au premier état d'autres propriétés de fluorescence qu'au deuxième état, de préférence qui sont fluorescentes au premier état et qui ne sont pas fluorescentes au deuxième état.

14. Procédé selon l'une quelconque des revendications 1 à 13, **caractérisé en ce que** le deuxième signal électromagnétique (3) est appliqué sur l'échantillon (2) en impulsions de densité d'intensité élevée et **en ce que** l'élévation de température locale temporaire de l'échantillon (2) est détectée directement après chaque impulsion du deuxième signal électromagnétique (3).

15. Dispositif pour la réalisation du procédé selon l'une quelconque des revendications 1 à 14 pour la représentation à résolution spatiale élevée d'une structure dans un échantillon, qui est marqué avec une substance qui est choisie dans un groupe de substances qui peuvent être transformées avec un premier signal électromagnétique d'un premier état, dans lequel elles présentent une section d'absorption plus grande pour un deuxième signal électromagnétique, en un deuxième état, dans lequel elles présentent une section d'absorption plus petite pour le deuxième signal électromagnétique, ou qui peuvent être transformées avec un premier signal électromagnétique en un premier état, dans lequel elles présentent une section d'absorption plus grande pour un deuxième signal électromagnétique, à partir d'un deuxième état, dans lequel elles présentent une section d'absorption plus petite pour le deuxième signal électromagnétique, le dispositif comprenant :
- une première source de signal pour le premier signal électromagnétique, avec laquelle une répartition spatiale d'une fraction de la substance au premier état est ajustable, selon laquelle au moins une zone dans laquelle la substance se trouve au premier état est limitée dans l'espace, et
- une deuxième source de signal pour le deuxième signal électromagnétique, avec laquelle l'échantillon peut être exposé au deuxième signal électromagnétique après l'ajustement de la répartition spatiale de la fraction de la substance au premier état au moyen du premier signal électromagnétique,
**caractérisé par** un détecteur (9) avec lequel au moins une élévation de température locale de l'échantillon (2) résultant de la section d'absorption plus grande de la substance au premier état peut être détectée.
